# EUROPÄISCHE PATENTSCHRIFT

(11) **EP 3 158 006 B1**
(45) Veröffentlichungstag und Bekanntmachung des Hinweises auf die Patenterteilung: **12.12.2018**
(21) Anmeldenummer: 15729490.1
(22) Anmeldetag: 17.06.2015
(51) Int. Cl.: C09C 1/04, C09C 1/22, C09C 1/24, C08K 3/00, C08K 3/22, C09C 1/00, C09C 3/06, C09C 3/08, C08K 5/098, C08K 9/02, C08K 3/013

(54) **MISCHUNGEN VON BESCHICHTETEN PIGMENTEN UND FETTSÄURESALZEN ZUR EINFÄRBUNG VON PVC**
MIXTURES OF COATED PIGMENTS AND FATTY ACID SALTS FOR THE COLORATION OF PVC
MÉLANGES DE PIGMENTS REVÊTUS ET SELS D'ACIDE GRAS POUR LA COLORATION DE PVC

(30) Priorität: 18.06.2014 EP 14173007
(43) Veröffentlichungstag der Anmeldung: 26.04.2017
(73) Patentinhaber: Lanxess Deutschland GmbH, 50569 Köln (DE)
(72) Erfinder: CHLOPEK, Krzysztof, 47804 Krefeld (DE)
(86) Internationale Anmeldenummer: PCT/EP2015/063632
(87) Internationale Veröffentlichungsnummer: WO 2015/193391

(56) Entgegenhaltungen:
- EP-A2- 0 799 865
- WO-A1-2014/091008
- WO-A2-2010/022936
- US-A- 4 710 375

## Beschreibung

Die vorliegende Erfindung betrifft Mischungen aus Pigmenten enthaltend zumindest eine anorganische Verbindung ausgewählt aus der Gruppe Eisenoxide, Eisenoxidhydroxide, Zinkferrite, Zinkoxide, Magnesiumferrite und Manganferrite, wobei die zumindest eine anorganische Verbindung mit einer Beschichtung enthaltend zumindest ein Hydroxid oder Oxid von Magnesium und Calcium, wobei der Anteil 0,3 bis 30 Gew.%, besonders bevorzugt von 0,5 bis 25 Gew.%, ganz besonders bevorzugt von 0,5 bis 20 Gew.% Magnesium, und 0,001 bis 0,1 Gew.% Calcium und 0,001 bis 0,1 Gew.% Calcium , bezogen auf das beschichtete Pigment ist, ausgestattet ist, und zumindest einem Calciumsalz oder Magnesiumsalz einer Fettsäure, Verfahren zu deren Herstellung, deren Verwendung zur Einfärbung von Polyvinylchlorid (PVC) sowie Verfahren zur Einfärbung von PVC und mit solchen Mischungen eingefärbtes PVC, sowie Kunststoffprodukte enthaltend solche Mischungen.

PVC wird überwiegend als Grundstoff zum Beispiel für Fensterprofile, Rohre, Fußbodenbeläge und Dachbahnen im Bausektor eingesetzt. Hart- und Weichfolien werden ebenfalls aus PVC hergestellt. PVC wird auch oft als Isolationsmaterial für Elektro-Kabel, und für Elektro-Schalterdosen, Einziehrohre für Kabel, Kabelkanäle oder Kabelabdeckungen verwendet.

PVC gehört zu der Gruppe der amorphen thermoplastischen Kunststoffe. Der Kunststoff ist typischerweise hart und spröde und wird üblicherweise durch die Zugabe von Weichmachern und Stabilisatoren für die unterschiedlichen Anwendungen angepasst.

PVC wird typischerweise mit unterschiedlichen Gehalten an Weichmachern verwendet. PVC mit einem Gehalt an Weichmachern von 0 bis 12% wird auch Hart-PVC genannt. PVC mit einem Gehalt an Weichmachern von mehr als 12% wird auch Weich-PVC genannt (Römpp Chemielexikon, Online Version 3.28, letzte Aktualisierung des Artikels: Dezember 2009, Dokumentkennung: RD-16-03650). In der Regel werden Weichmacher-Gehalte in Gewichtsprozent angegeben.

PVC wird häufig mit organischen und anorganischen Pigmenten eingefärbt. Als organische Pigmente werden z. B. Isoindole, Naphthol AS, Kupferphthalocyanin-Pigmente oder Monoazo-Calcium-Salze eingesetzt. Aus der Gruppe der anorganischen Pigmente werden häufig Mischphasen-Metalloxid-Pigmente, wie Nickel-Rutil-Pigmente, Chrom-Rutil-Pigmente, Eisen-Chromite, inverse Cobalt- bzw. Kupfer-Spinelle oder Eisen-Cobalt-Chromit-Spinelle eingesetzt. Diese Pigmente sind sehr wetter- und lichtstabil, haben jedoch den Nachteil, dass sie mehrfach teurer sind als andere eisenhaltige anorganische Pigmente.

Auch die Einfärbung von PVC mit anorganischen Pigmenten wie Eisenoxide oder Eisenoxidhydroxide, Zink-, Magnesium- oder Manganferrite ist bekannt. Eisenoxide und Eisenoxidhydroxide zeichnen sich als besonders lichtechte Pigmente aus, die über eine lange Zeit auch bei unterschiedlichsten Witterungsbedingungen eine konstante Farbe aufweisen. Allerdings treten bei der Einfärbung von PVC mit Eisenoxiden oder Eisenoxidhydroxiden, Zinkoxiden, Zink-, Magnesium- oder Manganferriten nach dem Stand der Technik sowohl bei der Verarbeitung bei den erforderlichen hohen Temperaturen als auch beim Aussetzen des geformten Kunststoffes an Licht, UV-Licht oder Wärme homogene oder inhomogene Verfärbungen des Produktes auf. Dieses ungewünschte Phänomen ist bei Hart-PVC deutlich gravierender, da Produkte aus Hart-PVC häufig in Außenbereichen eingesetzt werden, in denen witterungsbedingte Einflüsse natürlich intensiver sind. Bei Produkten aus Weich-PVC, die überwiegend in Innenbereichen eingesetzt werden, treten solche Verfärbungen gelegentlich ebenfalls auf, z.B. kurz nach der Verarbeitung. Diese negativen Effekte sind bereits seit langem bekannt und sind beispielsweise in S.S. Lele, J. Vinyl Tech. 1984, Vol. 6, No.2, S. 77 bis 81 oder P.Carty et al., Polymer 1992, Vol. 33, No. 13, S. 2704-2708 beschrieben.

Die EP 799865 A1 offenbart ein Pigment, dass aus Eisenoxid und einer Beschichtung aus Magnesium- und Calciumoxid besteht, die einer Formulierung neben anderen Bestandteilen auch Magnesiumstearat enthält. Es wird jedoch keine Mischung offenbart, deren Pigment praktisch ausschließlich mit Magnesiumhydroxid oder - oxid beschichtet ist.

In der WO2010/022936 werden Mischungen aus einem anorganischem Feststoff und mindestens einem Fettsäuresalz beschrieben, wobei beispielhalft nur unbeschichtete Kreide als anorganischer Feststoff offenbart wird.

Aus der prioritätsälteren, jedoch nachveröffentlichen WO2014/091008 sind beschichtete Pigmente zur Einfärbung von PVC bekannt, wobei als Beschichtung Magnesiumhydroxide oder - oxide in Frage kommen. Eine konkrete Mischung mit Magnesium- und/oder Calcium-Fettsäuresalzen findet sich jedoch explizit darin nicht.

Die DE 3539306 A1 beschreibt hitzebeständige Gelbpigmente, die mit Aluminiumphosphathydroxiden der allgemeinen Formel [AlO]ₓPO₄[OH]ₓ₋₃ beschichtet wurden, zur Einfärbung von thermoplastischen Kunststoffen. Eigene Versuche haben jedoch gezeigt, dass mit diesen beschichteten Pigmenten eingefärbtes PVC keine hinreichend höhere thermische Stabilität aufweist als das mit dem unbeschichteten Pigment eingefärbtes PVC. Eigene Versuche haben auch gezeigt, dass PVC, das durch mit anderen anorganischen Aluminiumverbindungen, z.B. Aluminiumoxid bzw. Aluminiumhydroxid oder Magnesiumphosphat beschichtete Eisenoxide eingefärbt ist, ebenfalls keine höhere thermische Stabilität aufweist als PVC, das durch unbeschichtete Eisenoxide eingefärbt ist.

Daher bestand die Aufgabe der vorliegenden Erfindung darin, Produkte enthaltend zumindest eine anorganische Verbindung ausgewählt aus der Gruppe Eisenoxide, Eisenoxidhydroxide, Zinkferrite, Zinkoxide, Magnesiumferrite und Manganferrite bereitzustellen, die nicht zu ungewünschten homogenen oder inhomogenen Verfärbungen des damit eingefärbtem PVC, sowohl in Form von Kunststoffprodukten als auch von daraus hergestellten Produkten, führen.

### Überraschenderweise wurde nun gefunden, dass

### Mischungen enthaltend

- zumindest ein Pigment enthaltend zumindest eine anorganische Verbindung ausgewählt aus der Gruppe Eisenoxide, Eisenoxidhydroxide, Zinkferrite, Zinkoxide, Magnesiumferrite und Manganferrite, wobei die zumindest eine anorganische Verbindung mit einer Beschichtung enthaltend zumindest ein Hydroxid oder Oxid von Magnesium und Calcium, wobei der Anteil 0,3 bis 30 Gew.%, besonders bevorzugt von 0,5 bis 25 Gew.%, ganz besonders bevorzugt von 0,5 bis 20 Gew.% Magnesium, und 0,001 bis 0,1 Gew.% Calcium und 0,001 bis 0,1 Gew.% Calcium, bezogen auf das beschichtete Pigment ist, ausgestattet ist, und
- zumindest ein Calciumsalz oder Magnesiumsalz einer Fettsäure der allgemeinen Formeln CₙH₂ₙ₊₁COOH (I), CₙH₂ₙ₋₁COOH (II), CₙH₂ₙ₋₃COOH (III) und/oder CₙH₂ₙ₋₅COOH (IV), wobei n von 10 bis 20, bevorzugt von 15 bis 19 ist,
diese Aufgabe lösen und die oben beschriebenen Nachteile der Pigmente des Standes der Technik überwinden.

Die erfindungsgemäßen Mischungen liegen bevorzugt in Pulverform vor.

Als Eisenoxide enthalten die in den erfindungsgemäßen Mischungen enthaltenen Pigmente beispielsweise Hämatit (Eisenoxid Rot, α-Fe₂O₃), Maghemit (braunes Eisenoxid, γ-Fe₂O₃) oder Magnetit (Eisenoxid Schwarz, Fe₃O₄), bevorzugt Hämatit (Eisenoxid Rot, α-Fe₂O₃).

Aus der Gruppe der Eisenoxidhydroxide enthalten die in den erfindungsgemäßen Mischungen enthaltenen Pigmente z.B. Goethit (Eisenoxid Gelb, α-FeOOH) oder Lepidocrocit (γ-FeOOH).

Zinkferrite, Magnesiumferrite und/oder Manganferrite gehören zu der Gruppe der Mischphasenpigmente der allgemeinen Formel MₓFe₃₋ₓO₄, wobei M für Zn, Mg oder Mn steht, und x Werte größer 0 und kleiner als oder gleich 1 umfasst. Das in den erfindungsgemäßen Mischungen enthaltene Pigment kann auch ein oder mehrere unterschiedliche der vorgenannten Mischphasenpigmente enthalten.

Zinkoxid im Sinne der Erfindung ist ZnO.

Bevorzugt enthält das in den erfindungsgemäßen Mischungen enthaltene Pigment nur eine anorganische Verbindung ausgewählt aus der Gruppe Eisenoxide, Eisenoxidhydroxide, Zinkferrite, Zinkoxide, Magnesiumferrite und Manganferrite.

Bei den in der erfindungsgemäßen Mischungen enthaltenen Pigmenten ist die Beschichtung bevorzugt direkt mit der zumindest einen anorganischen Verbindung ausgewählt aus der Gruppe der Eisenoxide, Eisenoxidhydroxide, Zinkferrite, Zinkoxide, Magnesiumferrite und Manganferrite verbunden. "Direkt" bedeutet in diesem Zusammenhang, dass sich zwischen der Beschichtung und der anorganischen Verbindung ausgewählt aus der Gruppe der Eisenoxide, Eisenoxidhydroxide, Zinkferrite, Zinkoxide, Magnesiumferrite und Manganferrite keine weitere Zwischenschicht befindet. Zwischenschicht bedeutet im diesem Zusammenhang jede andere Beschichtung außer der erfindungsgemäßen Beschichtung.

Die Fettsäuren der allgemeinen Formel CₙH₂ₙ₊₁COOH (I) sind gesättigte Fettsäuren. Bevorzugt sind die Calciumsalze und/oder Magnesiumsalze der gesättigten Fettsäure Stearinsäure (n=17). Die Fettsäuren der allgemeinen Formeln CₙH₂ₙ₋₁COOH (II) sind einfach ungesättigte Fettsäuren, z.B. Ölsäure (n=17). Die Fettsäuren der allgemeinen Formeln CₙH₂ₙ₋₃COOH (III) sind zweifach ungesättigte Fettsäuren, z.B. Linolsäure (n=17). Die Fettsäuren der allgemeinen Formeln CₙH₂ₙ₋₅COOH (IV) sind dreifach ungesättigte Fettsäuren, z.B. Calendulasäure (n=17). Calciumstearat und/oder Magnesiumstearat sind besonders bevorzugt.

Für "Calciumsalz oder Magnesiumsalz einer Fettsäure der allgemeinen Formeln (I), (II), III) und/oder (IV), wobei n von 10 bis 20, bevorzugt von 15 bis 19 ist," wird im Sinne der Erfindung "Fettsäuresalz" synonym verwendet.

In einer Ausführungsform liegen die erfindungsgemäßen Mischungen als Mischung
- zumindest eines Pigments enthaltend zumindest eine anorganische Verbindung ausgewählt aus der Gruppe Eisenoxide, Eisenoxidhydroxide, Zinkferrite, Zinkoxide, Magnesiumferrite und Manganferrite, wobei die zumindest eine anorganische Verbindung mit einer Beschichtung enthaltend zumindest ein Hydroxid oder Oxid von Magnesium und Calcium, wobei der Anteil 0,3 bis 30 Gew.%, besonders bevorzugt von 0,5 bis 25 Gew.%, ganz besonders bevorzugt von 0,5 bis 20 Gew.% Magnesium, und 0,001 bis 0,1 Gew.% Calcium und 0,001 bis 0,1 Gew.% Calcium , bezogen auf das beschichtete Pigment ist, ausgestattet ist,
- mit Calciumstearat und/oder Magnesiumstearat vor.

In einer bevorzugten Ausführungsform enthalten die in den erfindungsgemäßen Mischungen enthaltenen Pigmente bevorzugt von 0,3 bis 30 Gew.%, besonders bevorzugt von 0,5 bis 25 Gew.%, ganz besonders bevorzugt von 1 bis 20 Gew.% Magnesium und Calcium, berechnet als Summe der Gehalte der Elemente Magnesium und Calcium, wobei die Summe der Gehalte der Elemente Magnesium und Calcium auf das Gesamtgewicht der Pigmente bezogen wird.

In einer weiteren bevorzugten Ausführungsform enthalten die erfindungsgemäßen Mischungen bevorzugt von 0,3 bis 30 Gew.%, besonders bevorzugt von 0,5 bis 25 Gew.%, ganz besonders bevorzugt von 1 bis 20 Gew.% Magnesium und Calcium, berechnet als Summe der Gehalte der Elemente Magnesium und Calcium, wobei die Summe der Gehalte der Elemente Magnesium und Calcium auf das Gesamtgewicht der Mischung bezogen wird.

Der Gehalt der Elemente Magnesium und Calcium des Pigments wird, sofern nichts anderes angegeben ist, über Optische Emissionsspektrometrie nach Anregung im induktiv gekoppeltem Plasma (ICP-OES) bestimmt. Der Gehalt der Elemente Magnesium und Calcium kann auch über andere quantitative Messmethoden, z.B. mit Atomabsorptionsspektrometrie (AAS) bestimmt werden.

In einer weiteren bevorzugten Ausführungsform enthalten die erfindungsgemäßen Mischungen gleichzeitig von 0,2 bis 15 Gew.% von zumindest einem Fettsäuresalz, bevorzugt Calciumstearat und/oder Magnesiumstearat, wobei die Gewichtsprozente das Verhältnis der Summe der Gewichte der Fettsäuresalze zum Gesamtgewicht der erfindungsgemäßen Mischung darstellen. Der Magnesium- und Calciumgehalt der Mischung wird, sofern nichts anderes angegeben ist, über Optische Emissionsspektrometrie nach Anregung im induktiv gekoppeltem Plasma (ICP-OES) bestimmt.

Der Gehalt an Fettsäuresalz, bevorzugt an Calciumstearat und/oder Magnesiumstearat, in den erfindungsgemäßen Mischungen wird beispielsweise über Nahinfrarot- (NIR) oder mittlere IR-Spektroskopie (MIR) bestimmt. Hierbei kann die Messung direkt an der Probe erfolgen. Das Vorliegen von Calciumstearat und/oder Magnesiumstearat kann über geeignete qualitative Messmethoden, z.B. Massenspektrometrie oder NMR-Spektroskopie erfolgen. Hierzu ist gegebenenfalls eine Aufbereitung der Probe erforderlich, sodass das in der Mischung enthaltene zumindest ein Fettsäuresalz, bevorzugt Calciumstearat und/oder Magnesiumstearat, von dem Pigment abgetrennt wird. Dies erfolgt z.B. durch Lösungsmittel und/oder mit einer alkalischen flüssigen Phase, z.B. Natronlauge. In der alkalischen flüssigen Phase liegt die Fettsäure als Salz, z.B. als Natriumsalz, in gelöster Form vor und kann als freie Fettsäure nach Ansäuern in eine organische Phase extrahiert werden. Solche qualitativen und quantitativen Messmethoden von Fettsäuresalzen sind dem Fachmann bekannt und liefern nach vorher erforderlichen Kalibrierungsversuchen reproduzierbare Ergebnisse, die von der Messmethode unabhängig sind. Das zumindest eine Fettsäuresalz, bevorzugt Calciumstearat und/oder Magnesiumstearat, kann auch über Gaschromatografie/Massenspektrometrie-Kopplung (GC-MS-Kopplung) nachgewiesen werden. Das in der zu untersuchenden Probe enthaltene zumindest eine Fettsäuresalz, bevorzugt Calciumstearat und/oder Magnesiumstearat, wird hierzu mit einem Alkohol, beispielsweise Butanol, zu dem entsprechenden Alkylester umgesetzt. Dieser wird dann über GC-MS-Kopplung qualitativ und quantitativ bestimmt. Ob das zumindest eine Fettsäuresalz, bevorzugt Calciumstearat und/oder Magnesiumstearat, als weitere Beschichtung des Pigments oder als Bestandteil einer Mischung des Pigments vorliegt, kann eindeutig durch elektronenmikroskopische Aufnahmen der zu untersuchenden Probe festgestellt werden. Im Fall einer weiteren Beschichtung kann das zumindest eine Fettsäuresalz, bevorzugt Calciumstearat und/oder Magnesiumstearat, über Rasterelektronenmikrosopkie (REM) zusammen mit energiedispersiver Röntgenanalyse (EDX) auf der Oberfläche der Pigmentteilchen detektiert werden. Im Fall der Mischung wird das zumindest eine Fettsäuresalz, bevorzugt Calciumstearat und/oder Magnesiumstearat, gerade nicht an der Oberfläche der Pigmentteilchen, sondern als separate Teilchen detektiert, die sich zwischen den Pigmentteilchen befinden.

In einer weiteren bevorzugten Ausführungsform werden die in der erfindungsgemäßen Mischung enthaltenen Pigmente ausschließlich mit Hydroxiden und/oder Oxiden von Magnesium beschichtet. Die eingesetzten unbeschichteten Pigmente enthalten typischerweise Spuren von Calciumsalzen. Deshalb enthalten die mit Hydroxiden und/oder Oxiden von Magnesium beschichteten Pigmente typischerweise von 0,3 bis 30 Gew.%, besonders bevorzugt von 0,5 bis 25 Gew.%, ganz besonders bevorzugt von 0,5 bis 20 Gew.% Magnesium, und 0,001 bis 0,1 Gew.% Calcium.

In einer weiteren bevorzugten Ausführungsform bestehen die in der erfindungsgemäßen Mischung enthaltenen Pigmente aus zumindest einer anorganischen Verbindung ausgewählt aus der Gruppe Eisenoxide, Eisenoxidhydroxide, Zinkferrite, Zinkoxide, Magnesiumferrite und Manganferrite, wobei die zumindest eine anorganische Verbindung mit einer Beschichtung enthaltend zumindest ein Hydroxid oder Oxid von Magnesium und Calcium, besonders bevorzugt enthaltend zumindest ein Hydroxide von Magnesium und Calcium, ausgestattet ist.

Die erfindungsgemäßen Mischungen weisen typischerweise Ölzahlen zwischen 20 und 40 g Öl / 100 g Probe, bevorzugt zwischen 23 und 39 g Öl / 100 g Probe, auf.

Die Erfindung umfasst jede denkbare Kombination der verschiedenen definierten Verfahrens- und Stoffparameter und ihrer Vorzugsbereiche.

Überraschenderweise wurde nun gefunden, dass mit den erfindungsgemäßen Mischungen eingefärbtes PVC eine höhere thermische Stabilität aufweist als mit den entsprechenden nichtbeschichteten Pigmenten eingefärbtes PVC. Die erhöhte thermische Stabilität des mit der erfindungsgemäßen Mischungen gefärbten PVC kann mittels einer thermischen Behandlung mit einem Kneter gezeigt werden, wenn der zeitliche Verlauf des Drehmomentes, das an dem Kneter anliegt, und der Temperatur des gekneteten Produktes aufgezeichnet und für verschiedene Proben verglichen wird. Bei der Zersetzung des PVC tritt eine Degradierung des Polymers auf, was zu einer Verringerung der Viskosität und damit zur Abnahme des Drehmomentes, das an dem Kneter anliegt, führt.

Weiterhin kann die erhöhte thermische Stabilität des mit der erfindungsgemäßen Mischung gefärbten PVC über die Testung von Probenkörpern im Mathis-Ofen gemessen werden. Diese Messmethode ist in der PCT/EP2013/076585 beschrieben. Die Einzelheiten zu den Messmethoden und zu deren Auswertung finden sich im Abschnitt "Beispiele und Methoden".

Die vorliegende Erfindung betrifft auch die Verwendung der erfindungsgemäßen Mischungen zur Einfärbung von PVC, bevorzugt von Hart-PVC.

Die vorliegende Erfindung betrifft auch ein Verfahren zum Einfärben von PVC, vorzugsweise Hart-PVC, mit der erfindungsgemäßen Mischung. Die Einfärbung kann nach üblichen Methoden, z.B. durch Mischen, Kneten oder Extrudieren von ungefärbtem PVC mit der erfindungsgemäßen Mischung in der Schmelze oder durch Schmelzen von PVC Dry-Blends, die die erfindungsgemäßen Mischungen enthalten, erfolgen.

Die vorliegende Erfindung betrifft auch Kunststoffprodukte, für die synonym auch die Begriffe Masterbatch, Compounds oder eingefärbtes Endprodukt verwendet werden, enthaltend zumindest eine erfindungsgemäße Mischung sowie weiterhin enthaltend zumindest ein Polymer.

Das zumindest eine Polymer ist bevorzugt zumindest 50 Gew.%, bevorzugt zumindest 80 Gew.% aus dem Monomer Vinylchlorid aufgebaut. Dies gilt zum einen für den Fall, dass es sich bei dem Polymer um ein PVC-Copolymer handelt, das neben Vinylchlorid auch aus anderen Monomeren, z.B. Vinylacetat oder Butylacrylat, aufgebaut ist. Dann ist das Copolymer bevorzugt zumindest zu 50 Gew.%, besonders bevorzugt zumindest zu 80 Gew.%, aus dem Monomer Vinylchlorid aufgebaut. Dies gilt zum anderen für den Fall, dass es sich bei dem Polymer um Mischungen oder Blends von verschiedenen Polymeren handelt, wovon einer der Polymeren ein PVC-Homopolymer oder ein PVC-Copolymer ist. Dann ist die Mischung oder der Blend bevorzugt zumindest zu 50 Gew.%, besonders bevorzugt zumindest zu 80 Gew.%, aus dem Monomer Vinylchlorid aufgebaut. Bevorzugt ist das Polymer PVC, besonders bevorzugt Hart-PVC. Unter eingefärbtem PVC ist im Sinne der Erfindung ein PVC zu verstehen, bei dem die erfindungsgemäße Mischung in die Polymermatrix des Polyvinylchlorids eingelagert ist.

Compounds enthalten beispielsweise weiterhin Verarbeitungshilfsmittel, Verstärkungsmittel, Füllstoffe, Farbstoffe, weitere Pigmente und andere organische und anorganische Zusatzstoffe und ermöglichen so die Herstellung von unterschiedlichsten Formteilen durch z.B. Extrusion, Spritzguss, Kalandrieren oder Formblasen. Die Formteile entsprechen in der Regel den Endprodukten, im Zusammenhang mit dieser Erfindung Produkte genannt, z.B. Fensterrahmen, Rohre, Isolationsmaterial, Folien oder Flaschen. Zum Einfärben des PVC werden zu den Compounds Masterbatche oder direkt das Pigment zugegeben.

Das erfindungsgemäße Kunststoffprodukt enthält je nach Verwendungszweck unterschiedliche Mengen an erfindungsgemäßer Mischung.

Kunststoffprodukte aus der Gruppe der Masterbatche werden typischerweise als "Farbkonzentrate" zur Färbung von PVC oder anderen Kunststoffprodukten eingesetzt. Deshalb weisen diese Kunststoffprodukte einen relativ hohen Gehalt von 10 bis 90 Gew.%, besonders bevorzugt von 20 bis 70 Gew.% erfindungsgemäßer Mischung und einen Gehalt an Polymer von 10 bis 90 Gew.%, bevorzugt von 30 bis 80 Gew.%, jeweils bezogen auf das Gesamtgewicht des Kunststoffprodukts, auf. In einer weiteren Ausführungsform enthalten die Masterbatche als Polymer Wachse, gegebenenfalls in Mischung mit PVC, oder ohne Mischung mit PVC. Als Wachse werden beispielsweise Polyethylenwachse, Fischer-Tropsch-Wachse, Mineralwachse, Montanwachse, pflanzliche Wachse und/oder tierische Wachse ausgewählt. Vorzugsweise addieren sich die vorgenannten Komponenten zu 40 bis 100 Gew.-%, besonders bevorzugt zu 70 bis 100 Gew.-%, bezogen auf das Gesamtgewicht des Kunststoffprodukts.

Liegt das Kunststoffprodukt bereits in seiner zur endgültigen Verwendung als Compound mit der gewünschten Farbe vor, weisen diese Kunststoffprodukte in einer bevorzugten Ausführungsform einen Gehalt von 0,1 bis 10 Gew.%, besonders bevorzugt 0,5 bis 5 Gew.% erfindungsgemäßer Mischung , und einen Gehalt an Polymer bevorzugt von 90 bis 99,9 Gew.%, besonders bevorzugt 95 bis 99,5 Gew.%., jeweils bezogen auf das Gesamtgewicht des Kunststoffprodukts.

Die vorliegende Erfindung betrifft auch ein Verfahren zur Herstellung der erfindungsgemäßen Kunststoffprodukte, insbesondere von Compounds und Masterbatchen, durch Kneten oder Extrudieren von Polymer mit der erfindungsgemäßen Mischung.

PVC wird erfindungsgemäß mit unterschiedlichen Gehalten an Weichmachern verwendet. PVC mit einem Gehalt an Weichmachern von 0 bis 12% wird auch Hart-PVC genannt. PVC mit einem Gehalt an Weichmachern von mehr als 12% wird auch Weich-PVC genannt (Römpp Chemielexikon, Online Version 3.28, letzte Aktualisierung des Artikels: Dezember 2009, Dokumentkennung: RD-16-03650).

Die Erfindung betrifft auch ein Kunststoffprodukt enthaltend von 0 bis 15 Gew.%, bevorzugt von 0 bis 12 Gew.% Weichmacher bezogen auf die im Kunststoffprodukt enthaltene Menge an Polymer.

Geeignete Weichmacher sind z.B. Primär-, Sekundärweichmacher und Extender. Primärweichmacher sind z.B. Phthalsäureester, Trimellithsäureester, Phosphate und Polymerweichmacher. Sekundärweichmacher sind z.B. Adipate, Azelate, Decandisäureester und Alkylfettsäureester. Unter die Gruppe der Extender fallen z.B. aromatische Kohlenwasserstoffe und Chlorparaffine (aus Römpp Chemielexikon, Online Version 3.2.8, letzte Aktualisierung des Artikels: März 2006, Dokumentkennung: RD-23-00480).

Die vorliegende Erfindung betrifft auch ein Kunststoffprodukt, für das auch der Begriff "PVC Dry-Blend" verwendet wird, enthaltend eine Mischung aus pulverförmigem Polymer, vorzugsweise PVC, besonders bevorzugt Hart-PVC und erfindungsgemäßer Mischung. Solche PVC Dry-Blends können weiterhin auch die für die Herstellung von Compounds erforderlichen Zuschlagstoffe (z.B. Füllstoffe, Stabilisatoren, gegebenenfalls weitere Weichmacher, Farbstoffe, gegebenenfalls weitere Pigmente) enthalten. Diese können entweder in Substanz neben dem oder bereits eingearbeitet in das PVC des Dry-Blends vorliegen. Dry-Blends werden typischerweise durch intensives Mischen seiner oben beschriebenen Bestandteile 0,5 und 5 K unter dem Schmelzpunkt des Kunststoffes hergestellt. Aus den Dry-Blends können durch die für PVC üblichen Verarbeitungsmethoden wie Extrusion, Spritzguss, Kalandrieren oder Formblasen die Produkte hergestellt werden.

Die vorliegende Erfindung betrifft auch ein Produkt, für das synonym im Zusammenhang mit dieser Erfindung auch die Begriffe Formteil oder Fertiggut verwendet werden, enthaltend mindestens ein erfindungsgemäßes Kunststoffprodukt. Solche Produkte sind z.B. Fensterprofile, Rohre, Fußbodenbeläge, Isoliermaterial oder Dachbahnen.

Die vorliegende Erfindung betrifft auch ein Verfahren zur Herstellung der in der erfindungsgemäßen Mischung enthaltenen Pigmente. Zur Beschichtung können alle Verfahren angewendet werden, die zu einer Beschichtung der genannten Verbindungen auf Pigmenten führen. Dazu gehören Aufmahlen, Auffällen oder Aufsprühen der Verbindungen, mit denen das Pigment beschichtet werden soll, sowohl als Feststoff oder als Suspension oder als Lösung.

Das bevorzugte erfindungsgemäße Verfahren zur Herstellung des in der erfindungsgemäßen Mischung enthaltenen Pigments umfasst zumindest die Schritte
a) Bereitstellen einer wässrigen Suspension zumindest einer anorganischen Verbindung ausgewählt aus der Gruppe Eisenoxide, Eisenoxidhydroxide, Zinkferrite, Zinkoxide, Magnesiumferrite und Manganferrite,
   und
b) Auffällung der Beschichtung aus zumindest einem Hydroxid oder Oxid von Magnesium oder Calcium auf die anorganische Verbindung durch Zugabe von Magnesium- und/oder Calciumsalzen, bevorzugt in gelöster Form, zu der Suspension aus Schritt a) und danach Zugabe eines Fällungsmittels ausgewählt aus der Gruppe Alkalihydroxide, Erdalkalihydroxide und Ammoniak, bevorzugt in gelöster Form, zu der Suspension oder
b') Auffällung der Beschichtung aus zumindest einem Hydroxid oder Oxid von Magnesium oder Calcium auf die anorganische Verbindung durch Zugabe eines Fällungsmittels ausgewählt aus der Gruppe Alkalihydroxide, Erdalkalihydroxide und Ammoniak, bevorzugt in gelöster Form, zu der Suspension aus Schritt a) und danach Zugabe von Magnesium- und/oder Calciumsalzen, bevorzugt in gelöster Form, zu der Suspension,
wobei das Pigment in Suspension erhalten wird.

Das bevorzugte Verfahren zur Herstellung von dem in der erfindungsgemäßem Mischung enthaltenen beschichtetem Pigment umfasst gegebenenfalls zusätzlich einen, zwei, drei oder vier der Schritte
c) Isolierung des Pigments,
c') Wäsche des Pigments,
c") Trocknung des Pigments, und
c''') Zerkleinerung des Pigments.

Besonders bevorzugt umfasst das Verfahren zur Herstellung des in der erfindungsgemäßen Mischung enthaltenen Pigments zusätzlich zu den Schritten a), b) oder b') oder b") die Schritte c) Abtrennung des Pigments von der flüssigen Phase, c') Wäsche des Pigments, c") Trocknung des Pigments, und c''') Zerkleinerung des Pigments in der angegebenen Reihenfolge.

Die erfindungsgemäße Mischung wird in Schritt d) durch Mischen des erhaltenen Pigments, bevorzugt des aus Schritt c''') erhaltenen Pigments, mit zumindest einem Fettsäuresalz, bevorzugt mit Magnesiumstearat und/oder Calciumstearat, hergestellt.

Die in Schritt a) des bevorzugten Verfahrens eingesetzten anorganischen Verbindungen sind pulverförmige Pigmente oder Pasten aus Pigmenten, die direkt aus dem Pigment-Herstellungsprozess stammen. Pasten sind pigmenthaltige, wässrige Suspensionen.

In einer weiteren Variante (Schritt b") kann die Zugabe des Fällungsmittels ausgewählt aus der Gruppe Alkalihydroxide, Erdalkalihydroxide und Ammoniak, bevorzugt in gelöster Form, und der Magnesium- und/oder Calciumsalze, bevorzugt in gelöster Form, zu einer vorgelegten Pigmentsuspension auch simultan erfolgen. Durch die alternativen Schritte b), b') oder b") wird die anorganische Verbindung mit zumindest einem Hydroxid oder Oxid von Magnesium oder Calcium beschichtet.

Die in dem erfindungsgemäßen Verfahren besonders bevorzugten Fällungsmittel sind Natriumhydroxid und/oder Kaliumhydroxid.

Bei den Varianten gemäß der Schritte b), b') oder b") werden bevorzugt Magnesium- und/oder Calciumsalze, besonders bevorzugt deren wässrige Lösungen, ganz besonders bevorzugt Magnesiumsulfat, Magnesiumchlorid, Magnesiumnitrat, Calciumchlorid, und/oder Calciumnitrat eingesetzt.

Während der Auffällung der Beschichtung aus zumindest einem Hydroxid oder Oxid von Magnesium oder Calcium auf die anorganische Verbindung und gegebenenfalls während der Nachreaktion wird bevorzugt eine Temperatur von 10 bis 99°C, besonders bevorzugt von 20 bis 85°C, ganz besonders bevorzugt von 20 bis 70°C gewählt.

Die Zeit, während der entweder das Fällungsmittel oder die Magnesium- und/oder Calciumsalze zu der Reaktionsmischung zugegeben werden, kann innerhalb von breiten Werten schwanken.

Bevorzugt erfolgt eine Mischung der Reaktionskomponenten in den Schritten b), b') oder b"), besonders bevorzugt durch statische oder dynamische Mischer. Hierzu werden zum Beispiel Rührer, Propeller, Schaufeln, und /oder Pumpen eingesetzt.

Das Reaktionsgemisch aus den Schritten b), b') oder b") wird nach der Zugabe der Komponenten gegebenenfalls noch weiter durchmischt, um die Auffällung des zumindest einen Hydroxids oder Oxids von Magnesium oder Calcium auf die anorganische Verbindung möglichst vollständig verlaufen zu lassen. Die Zeit für die Nachreaktion ist abhängig von der Größe des Reaktionsansatzes. Zu Überprüfung der Vollständigkeit der Reaktion können in zeitlichen Intervallen Proben gezogen werden, die auf den Magnesium- und/oder Calciumgehalt untersucht werden. Wird der erwartete Magnesium- und/oder Calciumgehalt erreicht, ist die Reaktion beendet.

In einer Ausführungsform wird nach den Schritten b) oder b') oder b") das Pigment in Schritt c) von der Reaktionsmischung mit üblichen Methoden, bevorzugt durch Filtrieren oder Zentrifugieren, abgetrennt.

Der abgetrennte Feststoff wird dann in Schritt c') mit Wasser, bevorzugt mit vollentsalztem Wasser, gewaschen, bevorzugt, bis das Filtrat nur noch eine Leitfähigkeit von kleiner als oder gleich 2000 µS/m, besonders bevorzugt von kleiner als oder gleich 1500 µS/m aufweist.

Anschließend wird das Pigment als gewaschener Feststoff aus Schritt c') in Schritt c") getrocknet. Die Trocknung findet typischerweise über Bandtrockner, Tellertrockner, Sprühtrockner oder auf Blechen durchgeführt. Typischerweise erfolgt die Trocknung bei Temperaturen von 60 bis 200, bevorzugt von 80 bis 200°C, statt.

Anschließend wird in Schritt c''') der getrocknete Feststoff zerkleinert. Typischerweise erfolgt die Zerkleinerung in Schritt c''') in Form einer Mahlung, bevorzugt über Schlagkreuzmühlen, Pendelmühlen, Strahlmühlen oder Prallmühlen.

Anschließend erfolgt in Schritt d) das Mischen des aus Schritt c''') erhaltenen Pigments mit zumindest einem Fettsäuresalz, bevorzugt mit Magnesiumstearat und/oder Calciumstearat. Typischerweise erfolgt das Mischen über dem Fachmann für Feststoff-Mischungen bekannte Apparate. Bevorzugt erfolgt das Mischen bei Umgebungstemperatur, besonders bevorzugt bei 10 bis 40°C.

Die erfindungsgemäße Mischung liegt danach als pulverförmiges Produkt vor und kann ohne weitere Behandlungsschritte zum Einfärben von PVC verwendet werden.

In Verfahren zur Herstellung von Pigmenten werden teilweise Kalzinierungsschritte eingesetzt. Unter Kalzinierung wird eine thermische Behandlung eines festen oder halbfeuchten Pigments bei Temperaturen von größer als 600°C verstanden. Dies ist gegebenenfalls erforderlich, wenn Pigmente entwässert oder in andere Modifikationen umgewandelt werden sollen. In dem erfindungsgemäßen Verfahren ist ein Kalzinierungsschritt nicht erforderlich. In einer bevorzugten Ausführungsform des erfindungsgemäßen Verfahrens ist daher ein Kalzinierungsschritt ausgeschlossen. In einer besonders bevorzugten Ausführungsform des erfindungsgemäßen Verfahrens ist daher ein Kalzinierungsschritt bei Temperaturen von größer als 600°C ausgeschlossen.

Das besonders bevorzugte erfindungsgemäße Verfahren umfasst somit zumindest die Schritte
a) Bereitstellen einer wässrigen Suspension zumindest einer anorganischen Verbindung ausgewählt aus der Gruppe Eisenoxide, Eisenoxidhydroxide, Zinkferrite, Zinkoxide, Magnesiumferrite und Manganferrite,
   und
b) Auffällung der Beschichtung aus zumindest einem Hydroxid oder Oxid von Magnesium oder Calcium auf die anorganische Verbindung durch Zugabe von Magnesium- und/oder Calciumsalzen, bevorzugt in gelöster Form, zu der Suspension aus Schritt a) und danach Zugabe eines Fällungsmittels ausgewählt aus der Gruppe Alkalihydroxide, Erdalkalihydroxide und Ammoniak, bevorzugt in gelöster Form, zu der Suspension, oder
b') Auffällung der Beschichtung aus zumindest einem Hydroxid oder Oxid von Magnesium oder Calcium auf das Pigment durch Zugabe eines Fällungsmittels aus der Gruppe Alkalihydroxide, Erdalkalihydroxide, oder Ammoniak, bevorzugt in gelöster Form, zu der Suspension aus Schritt a) und danach Zugabe von Magnesium- und/oder Calciumsalzen, bevorzugt in gelöster Form, zu der Suspension, oder
b") Auffällung der Beschichtung aus zumindest einem Hydroxid oder Oxid von Magnesium oder Calcium auf die anorganische Verbindung durch die simultane Zugabe des Fällungsmittels ausgewählt aus der Gruppe Alkalihydroxide, Erdalkalihydroxide und Ammoniak, bevorzugt in gelöster Form, und der Magnesium- und/oder Calciumsalze, bevorzugt in gelöster Form, zu der wässrigen Suspension aus Schritt a),
   und
c) Abtrennung des Pigments von der flüssigen Phase, und
c') Wäsche des Pigments, und
c") Trocknung des Pigments, und
c''') Zerkleinerung des Pigments,
   und
d) Mischen des aus Schritt c''') erhaltenen Pigments mit zumindest einem Calciumsalz oder Magnesiumsalz einer Fettsäure der allgemeinen Formeln (I), (II), (III) und/oder (IV), bevorzugt mit Magnesiumstearat und/oder Calciumstearat.

Die erfindungsgemäßen Mischungen stellen eine Verbesserung des Standes der Technik dar, da Kunststoffprodukte und Produkte aus PVC, die mit den erfindungsgemäßen Mischungen eingefärbt sind, eine hohe thermische Stabilität und/oder UV-Stabilität aufweisen.

### Beispiele und Methoden

### I. Beschreibung der verwendeten Mess- und Prüfmethoden

Die Ergebnisse der Messungen zu den Beispielen sind in Tabelle 1 zusammengefasst.

### I.1 Mg- und Ca-Bestimmung

Der Magnesium- und Calciumgehalt der Pigmente wurde über Optische Emissionsspektrometrie nach Anregung im induktiv gekoppeltem Plasma (ICP-OES: inductively coupled plasma-optical emission spectrometry) als Gehalt der Elemente gemessen.

### I.2 Ölzahl

Die Ölzahl wurde gemäß der Norm DIN ISO 787/5 in g Öl/100 g Probe gemessen. Mit Probe ist entweder das Pigment oder die Mischung gemeint.

### I.3 Abtestung der PVC-Stabilität mittels Kneter Thermo Haake Rheomix 600p (KneterStabilität)

Eine pulverförmige PVC-Mischung bestehend aus 50 Gew. % Vestolit B 7021 Ultra + 50 Gew. % SorVyl DB 6668 Natur 3/03 wird mit der zu testenden Mischung (4 Gew. % bezogen auf 100% PVC- Zusammensetzung) homogen vermischt.

Eine pulverförmige PVC-Mischung bestehend aus 50 Gew. % Vestolit B 7021 Ultra + 50 Gew. % SorVyl DB 6668 Natur 3/03 wird mit der zu testenden pulverförmigen Pigmentprobe (4 Gew. % bezogen auf 100% PVC- Zusammensetzung) oder der zu testenden Mischung homogen vermischt.

Die pigmentierte PVC-Mischung wird in dem auf 190°C vorgeheizten Messkneter (Thermo Haake Rheomix 600p mit Walzenrotoren R6), der mit einem Rotationsrheometer ausgerüstet ist, händisch eingefüllt. Das Messprogramm (PolyLab Monitor) wird gestartet und zeichnet den zeitlichen Verlauf des Drehmomentes, das an den Walzenrotoren anliegt, und die Temperatur der Probe auf. Die pigmentierte PVC-Mischung wird bei 190°C und 50 rpm geknetet. Um die Eignung der Mischung bezüglich der Stabilisierung von PVC zu bestimmen, wird das Maximum des Drehmoments auf der Zeitachse in Minuten angegeben, bei dem die höchste Produkttemperatur gemessen wurde. Nach diesem Maximum des Drehmomentes fällt das Drehmoment stark ab, da sich nach dieser Zeit das PVC in zunehmenden Maß zersetzt und dadurch die Viskosität des gekneteten Produktes verringert. Diese Werte werden mit dem entsprechenden Wert des gleichen, aber nicht beschichtetem Pigmentpulver verglichen. Je länger die Zeitdauer bis zum genannten Maximum ist, desto höher ist die Stabilität des mit der Mischung eingefärbten PVC.

### II: Beispiele

### II.1 Eigenschaften der verwendeten anorganischen Pigmente und Kunststoffe

**Bayferrox® 110** Pigmentpulver der Fa. LANXESS Deutschland GmbH: Hämatit (rotes Eisenoxid, α-Fe2O3) mit einer BET-Oberfläche nach DIN ISO 9277 von 13-16 m²/g.

**Bayferrox® 920:** Goethit, α-FeOOH-Paste der Firma LANXESS Deutschland GmbH, aus der durch Trocknung und Mahlung Bayferrox® 920 Pulver produziert wird. Das pulverförmige Pigment weist eine BET-Oberfläche nach DIN ISO 9277 von 11-15 m²/g auf. Alternativ kann auch das pulverförmige Pigment Bayferrox® 920 mit Wasser auf die entsprechende Pigmentkonzentration (s. Beispiele) angemaischt werden.

**Calciumstearat:** Pulver der Fa. VWR BDH PROLABO® mit Ca-Gehalt zwischen 9 bis 11 Gew.% (als CaO berechnet).

**SorVyl DB 6668 Natur 3/03:** Hart-PVC-Compound der Fa. Polymerchemie (Pulverform, stabilisiert mit Ca/Zn, wobei der Gehalt an Bis(pentan-2,4-dionato)calcium unter 1 Gew.% liegt, mit Erweichungspunkt >120°C, Flammpunkt > 190°C, Zündtemperatur > 300°C, Dichte nach DIN EN ISO 1183-1, Verfahren A von 1,39 g/cm³, Schüttdichte nach DIN EN ISO 60 von 0,54 g/ml, Thermostabilität nach DIN EN 60811-3-2 von größer/gleich 25 Min.).

**VESTOLIT® B 7021 Ultra:** Homopolymer Mikro-S-PVC der Fa. Vestolit (Pulverform, K-Wert nach DIN EN ISO 1628-2 von 70, Viskositätszahl nach DIN EN ISO 1628-2 von 125 cm³/g, Schüttdichte nach DIN EN ISO 60 von 0,3 von g/cm³, Siebanalyse - Rückstand auf 0,063 mm-Sieb nach DIN EN ISO 1624 von < 1%, Wassergehalt nach K. Fischer DIN 53 715 von ≤ 0,3%, pH-Wert des wässrigen Auszuges nach DIN EN ISO 1264 von 8, Pastenviskosität 1,5 /s von 1,8 Pa s, Pastenviskosität 45 /s von 2,2 Pa s).

### 11.2 Erfindungsgemäße Beispiele und Vergleichsbeispiele

### Beispiel 1 (Vergleichsbeispiel)

Zu dem Henschelmischer Typ FM4 (Fa. Thyssen Henschel) wurden 145,5 g Pigment Bayferrox® 110 und 4,5g Calciumstearat zugegeben. Beide Substanzen wurden bei Raumtemperatur (20 bis 25°C) 20 Min. miteinander bei 1000 rpm gemischt. Das pulverförmige Produkt wird ohne weitere Behandlung für die Abtestung eingesetzt.

### Beispiel 2 (Vergleichsbeispiel)

Zu dem Henschelmischer Typ FM4 wurden 141 g Pigment Bayferrox® 110 und 9 g Calciumstearat zugegeben. Beide Substanzen wurden bei Raumtemperatur (20 bis 25°C) 20 Min. miteinander bei 1000 rpm gemischt. Das pulverförmige Produkt wird ohne weitere Behandlung für die Abtestung eingesetzt.

### Ausgangsmaterial 1 für Beispiele 3 und 4

Zu 3,3 dm³ wässriger Suspension von Bayferrox® 110 (6,26 mol Fe₂O₃) mit einem pH-Wert von 4,8 wurden bei 60°C unter Rühren 1443 mL einer MgSO₄-Lösung (entspricht 2,58 mol/dm³ MgO) zugegeben. Anschließend wurden pro mol Fe₂O₃ unter Rühren 3,98 mol NaOH als Lösung innerhalb von 30 Min. zugetropft (2215 g mit Konzentration 16,6 mol/dm³). Die Suspension wurde 60 Min. nachgerührt. Der pH-Wert der Suspension lag bei >11. Das Pigment wurde nach beendeter Reaktion über eine Nutsche filtriert, gewaschen, bis die Leitfähigkeit des Filtrates unter 300 µS/cm betrug, im Trockenschrank bei 120°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 3

Zu dem Henschelmischer Typ FM4 wurden 145,5 g Pigment Ausgangsmaterial 1 und 4,5 g Calciumstearat zugegeben. Beide Substanzen wurden bei Raumtemperatur (20 bis 25°C) 20 Min. bei 1000 rpm miteinander gemischt. Das pulverförmige Produkt wird ohne weitere Behandlung für die Abtestung eingesetzt.

### Beispiel 4

Zu dem Henschelmischer Typ FM4 wurden 141 g Pigment (Ausgangsmaterial 1 und 9 g Calciumstearat zugegeben. Beide Substanzen wurden bei Raumtemperatur (20 bis 25°C) 20 Min. miteinander bei 1000 rpm gemischt. Das pulverförmige Produkt wird ohne weitere Behandlung für die Abtestung eingesetzt.

### Beispiel 5 (Vergleichsbeispiel)

Zu dem Henschelmischer Typ FM4 wurden 145,5 g Pigment Bayferrox® 920 Pulver und 4,5 g Calciumstearat zugegeben. Beide Substanzen wurden bei Raumtemperatur (20 bis 25°C) 20 Min. lang miteinander bei 1000 rpm gemischt. Das pulverförmige Produkt wird ohne weitere Behandlung für die Abtestung eingesetzt.

### Ausgangsmaterial 2 für Beispiele 6 und 7

Zu 2,05 dm³ wässriger Suspension von Bayferrox® 920 (5,63 mol FeOOH) mit einem pH-Wert von ca. 4 wurden bei 60°C unter Rühren 3571 mL einer MgSO₄-Lösung (1,39 mol/dm³ als MgO) zugegeben. Anschließend werden pro mol FeOOH unter Rühren 1,41 mol NaOH als Lösung innerhalb von 15 Min. zugetropft (1283g mit Konzentration 7,87 mol/dm³). Die Suspension wurde 60 Min. nachgerührt. Der pH-Wert der Suspension lag bei ca. 10. Das Pigment wurde nach beendeter Reaktion über eine Nutsche filtriert, gewaschen, bis die Leitfähigkeit des Filtrates unter 300 µS/cm betrug, im Trockenschrank bei 120°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 6 (erfindungsgemäß)

Zu dem Henschelmischer Typ FM4 wurden 145,5 g Pigment (Ausgangsmaterial 2) und 4,5 g Calciumstearat zugegeben. Beide Substanzen wurden bei Raumtemperatur (20 bis 25°C) 20 Min. lang miteinander bei 1000 rpm gemischt. Das pulverförmige Produkt wird ohne weitere Behandlung für die Abtestung eingesetzt.

### Beispiel 7 (erfindungsgemäß)

Zu dem Henschelmischer Typ FM4 wurden 141 g Pigment (Ausgangsmaterial 2) und 9 g Calciumstearat zugegeben. Beide Substanzen wurden bei Raumtemperatur (20 bis 25°C) 20 Min. lang miteinander bei 1000 rpm gemischt. Das pulverförmige Produkt wird ohne weitere Behandlung für die Abtestung eingesetzt.

Die Eigenschaften der Produkte sind in der Tabelle 1 zusammengefasst.

**Tabelle 1**

| **Beispiel** | **Mg-Gehalt (Gew. %)** | **Calciumstearat Gehalt (Gew.%)** | **Ölzahl (g Öl / 100 g Probe)** | **Kneterstabilität (Min.)** |
|---|---|---|---|---|
| Bayferrox ® 110 ^{a)} | 0,01 | 0 | 24,8 | 14 |
| 1 | 0,01 | 3 | 24,1 | 14 |
| 2 | 0,01 | 6 | 24,1 | 14 |
| 3 | 7,6 | 3 | 28,3 | 19 |
| 4 | 7,4 | 6 | 28,2 | 20 |
| | | | | |
| Bayferrox ® 920 ^{b)} | 0,02 | 0 | 27,6 | 13 |
| 5 | 0,02 | 3 | 28,0 | 13 |
| 6 | 14,0 | 3 | 38,3 | 19 |
| 7 | 13,6 | 6 | 33,3 | 20 |

| | | | | |
|---|---|---|---|---|
| a): unbeschichtetes Pigment als direkter Vergleich zu Beispielen 1 bis 4, b): unbeschichtetes Pigment als direkter Vergleich zu Beispielen 5 bis 7. | | | | |

## Patentansprüche

1. Mischung enthaltend
• zumindest ein Pigment enthaltend zumindest eine anorganische Verbindung ausgewählt aus der Gruppe Eisenoxide, Eisenoxidhydroxide, Zinkferrite, Zinkoxide, Magnesiumferrite und Manganferrite, wobei die zumindest eine anorganische Verbindung mit einer Beschichtung enthaltend zumindest ein Hydroxid oder Oxid von Magnesium und Calcium wobei der Anteil 0,3 bis 30 Gew.%, besonders bevorzugt von 0,5 bis 25 Gew.%, ganz besonders bevorzugt von 0,5 bis 20 Gew.% Magnesium, und 0,001 bis 0,1 Gew.% Calcium und 0,001 bis 0,1 Gew.% Calcium , bezogen auf das beschichtete Pigment ist, ausgestattet ist, und
• zumindest ein Calciumsalz oder Magnesiumsalz einer Fettsäure der allgemeinen Formeln CₙH₂ₙ₊₁COOH (I), CₙH₂ₙ₋₁COOH (II), CₙH₂ₙ₋₃COOH (III) und/oder CₙH₂ₙ₋₅COOH (IV), wobei n von 10 bis 20, bevorzugt von 15 bis 19 ist.

2. Mischung gemäß Anspruch 1, wobei das in der Mischung enthaltene Pigment aus zumindest einer anorganischen Verbindung ausgewählt aus der Gruppe Eisenoxide, Eisenoxidhydroxide, Zinkferrite, Zinkoxide, Magnesiumferrite und Manganferrite besteht, wobei die zumindest eine anorganische Verbindung mit einer Beschichtung enthaltend zumindest ein Hydroxid oder Oxid von Magnesium und Calcium, bevorzugt mit einer Beschichtung enthaltend zumindest ein Hydroxid von Magnesium und Calcium, ausgestattet ist.

3. Mischung gemäß Anspruch 1 oder 2, wobei in dem in der Mischung enthaltenen Pigment die Beschichtung direkt mit der zumindest einen anorganischen Verbindung verbunden ist.

4. Mischung gemäß einem der Ansprüche 1 bis 3, wobei die Mischung von 0,3 bis 30 Gew.%, bevorzugt von 0,5 bis 25 Gew.%, besonders bevorzugt von 1 bis 20 Gew.% Magnesium und Calcium, berechnet als Summe der Gehalte der Elemente Magnesium und Calcium, wobei die Summe der Gehalte der Elemente Magnesium und Calcium auf das Gesamtgewicht der Mischung bezogen wird.

5. Mischung gemäß einem der Ansprüche 1 bis 4, wobei die Mischung von 0,2 bis 15 Gew.% zumindest eines Calciumsalzes oder Magnesiumsalzes einer Fettsäure der allgemeinen Formeln CₙH₂ₙ₊₁COOH (I), CₙH₂ₙ₋₁COOH (II), CₙH₂ₙ₋₃COOH (III) und/oder CₙH₂ₙ₋₅COOH (IV), bevorzugt Calciumstearat und/oder Magnesiumstearat, enthält.

6. Kunststoffprodukt enthaltend
• zumindest eine Mischung gemäß einem der Ansprüche 1 bis 5 und
• zumindest ein Polymer, wobei zumindest 50 Gew.%, bevorzugt zumindest 80 Gew.% des Polymers aus dem Monomer Vinylchlorid aufgebaut sind,
wobei sich die vorgenannten Komponenten vorzugsweise zu 40 bis 100 Gew.-%, besonders bevorzugt zu 70 bis 100 Gew.-%, bezogen auf das Gesamtgewicht des Kunststoffprodukts, addieren.

7. Kunststoffprodukt gemäß Anspruch 6 enthaltend von 10 bis 90 Gew.%, bevorzugt von 20 bis 70 Gew.%, oder von 0,1 bis 10 Gew.%, bevorzugt von 0,5 bis 5 Gew.% der Mischung gemäß einem der Ansprüche 1 bis 5.

8. Kunststoffprodukt gemäß einem der Ansprüche 6 oder 7 enthaltend von 0 bis 15 Gew.%, bevorzugt von 0 bis 12 Gew.% Weichmacher, bezogen auf die im Kunststoffprodukt enthaltene Menge an Polymer.

9. Kunststoffprodukt gemäß einem der Ansprüche 6 bis 8 enthaltend eine Mischung aus pulverförmigen Polymer und der Mischung gemäß einem der Ansprüche 1 bis 5.

10. Verfahren zur Herstellung der Mischung gemäß einem der Ansprüche 1 bis 5 umfassend zumindest die Schritte
a) Bereitstellen einer wässrigen Suspension zumindest einer anorganischen Verbindung ausgewählt aus der Gruppe Eisenoxide, Eisenoxidhydroxide, Zinkferrite, Zinkoxide, Magnesiumferrite und Manganferrite,
und
b) Auffällung der Beschichtung aus zumindest einem Hydroxid oder Oxid von Magnesium oder Calcium auf die anorganische Verbindung durch Zugabe von Magnesium- und/oder Calciumsalzen, bevorzugt in gelöster Form, zu der Suspension aus Schritt a) und danach Zugabe eines Fällungsmittels ausgewählt aus der Gruppe Alkalihydroxide, Erdalkalihydroxide und Ammoniak, bevorzugt in gelöster Form, zu der Suspension oder
b') Auffällung der Beschichtung aus zumindest einem Hydroxid oder Oxid von Magnesium oder Calcium auf die anorganische Verbindung durch Zugabe eines Fällungsmittels ausgewählt aus der Gruppe Alkalihydroxide, Erdalkalihydroxide und Ammoniak, bevorzugt in gelöster Form, zu der Suspension aus Schritt a) und danach Zugabe von Magnesium- und/oder Calciumsalzen, bevorzugt in gelöster Form, zu der Suspension,
und
c) Isolierung des Pigments, und/oder
c') Wäsche des Pigments, und/oder
c") Trocknung des Pigments, und/oder
c''') Zerkleinerung des Pigments
und
d) Mischen des aus Schritt c''') erhaltenen Pigments mit zumindest einem Calciumsalz oder Magnesiumsalz einer Fettsäure der allgemeinen Formeln (I), (II), (III) und/oder (IV), bevorzugt mit Magnesiumstearat und/oder Calciumstearat.
wobei die Mischung erhalten wird.

11. Verfahren zur Herstellung der Mischung gemäß Anspruch 10, in dem ein Kalzinierungsschritt, bevorzugt bei Temperaturen größer als 600°C, ausgeschlossen ist.

12. Verfahren zur Herstellung der Kunststoffprodukte gemäß einem der Ansprüche 6 bis 9 durch Kneten oder Extrudieren von Polymer mit der Mischung gemäß einem der Ansprüche 1 bis 5.

13. Verfahren zur Herstellung des Kunststoffprodukts gemäß Anspruch 9 durch Vermischung von zumindest einer Mischung gemäß einem der Ansprüche 1 bis 5 und pulverförmigem PVC, bevorzugt durch Mischen der Bestandteile zwischen 0,5 und 20 K unter dem Schmelzpunkt des Kunststoffes.

14. Verwendung der Mischung gemäß einem der Ansprüche 1 bis 5 zur Einfärbung von PVC, bevorzugt von Hart-PVC.

15. Produkt enthaltend mindestens ein Kunststoffprodukt gemäß einem der Ansprüche 6 bis 9.

16. Produkt nach Anspruch 15, wobei das Produkt Fensterprofile, Rohre, Fußbodenbeläge, Isoliermaterial oder Dachbahnen umfasst.

## Claims

1. Mixture comprising
• at least one pigment comprising at least one inorganic compound selected from the group of iron oxides, iron oxide hydroxides, zinc ferrites, zinc oxides, magnesium ferrites and manganese ferrites, the at least one inorganic compound having been provided with a coating comprising at least one hydroxide or oxide of magnesium and calcium, the proportion being from 0.3% to 30% by weight, more preferably from 0.5% to 25% by weight, most preferably from 0.5% to 20% by weight of magnesium, and from 0.001% to 0.1% by weight of calcium and from 0.001% to 0.1% by weight of calcium, based on the coated pigment, and
• at least one calcium salt or magnesium salt of a fatty acid of the general formulae CnH2n+1COOH (I), CnH2n 1COOH (II), CnH2n 3COOH (III) and/or CnH2n 5COOH (IV), where n is from 10 to 20, preferably from 15 to 19.

2. Mixture according to Claim 1, wherein the pigment present in the mixture consists of at least one inorganic compound selected from the group of iron oxides, iron oxide hydroxides, zinc ferrites, zinc oxides, magnesium ferrites and manganese ferrites, wherein the at least one inorganic compound is equipped with a coating comprising at least one hydroxide or oxide of magnesium and calcium, preferably with a coating comprising at least one hydroxide of magnesium and calcium.

3. Mixture according to Claim 1 or 2, wherein the coating in the pigment present in the mixture is bonded directly to the at least one inorganic compound.

4. Mixture according to any of Claims 1 to 3, wherein the mixture from 0.3% to 30% by weight, preferably from 0.5% to 25% by weight, more preferably from 1% to 20% by weight of magnesium and calcium, calculated as the sum total of the contents of the elements magnesium and calcium, where the sum total of the contents of the elements magnesium and calcium is based on the total weight of the mixture.

5. Mixture according to any of Claims 1 to 4, wherein the mixture comprises from 0.2% to 15% by weight of at least one calcium salt or magnesium salt of a fatty acid of the general formulae CnH2n+1COOH (I), CnH2n 1COOH (II), CnH2n 3COOH (III) and/or CnH2n 5COOH (IV), preferably calcium stearate and/or magnesium stearate.

6. Plastics product comprising
• at least one mixture according to any of Claims 1 to 5 and
• at least one polymer, where at least 50% by weight, preferably at least 80% by weight, of the polymer is formed from the monomer vinyl chloride,
wherein the aforementioned components preferably add up to 40% to 100% by weight, more preferably to 70% to 100% by weight, based on the total weight of the plastics product.

7. Plastics product according to Claim 6, containing from 10% to 90% by weight, preferably from 20% to 70% by weight, or from 0.1% to 10% by weight, preferably from 0.5% to 5% by weight, of the mixture according to any of Claims 1 to 5.

8. Plastics product according to either of Claims 6 and 7, containing from 0% to 15% by weight, preferably from 0% to 12% by weight, of plasticizer based on the amount of polymer present in the plastics product.

9. Plastics product according to any of Claims 6 to 8, comprising a mixture of pulverulent polymer and the mixture according to any of Claims 1 to 5.

10. Process for producing the mixture according to any of Claims 1 to 5, comprising at least the steps of
a) providing an aqueous suspension of at least one inorganic compound selected from the group of iron oxides, iron oxide hydroxides, zinc ferrites, zinc oxides, magnesium ferrites and manganese ferrites,
and
b) precipitating the coating of at least one hydroxide or oxide of magnesium or calcium onto the inorganic compound by adding magnesium salts and/or calcium salts, preferably in dissolved form, to the suspension from step a) and then adding a precipitant selected from the group of alkali metal hydroxides, alkaline earth metal hydroxides and ammonia, preferably in dissolved form, to the suspension or
b') precipitating the coating of at least one hydroxide or oxide of magnesium or calcium onto the inorganic compound by adding a precipitant selected from the group of alkali metal hydroxides, alkaline earth metal hydroxides and ammonia, preferably in dissolved form, to the suspension from step a) and then adding magnesium salts and/or calcium salts, preferably in dissolved form, to the suspension,
and
c) isolating the pigment, and/or
c') washing the pigment, and/or
c'') drying the pigment, and/or
c''') comminuting the pigment
and
d) mixing the pigment obtained from step c''') with at least one calcium salt or magnesium salt of a fatty acid of the general formulae (I), (II), (III) and/or (IV), preferably with magnesium stearate and/or calcium stearate,
to obtain the mixture.

11. Process for producing the mixture according to Claim 10, in which a calcination step, preferably at temperatures greater than 600°C, is excluded.

12. Process for producing the plastics products according to any of Claims 6 to 9 by kneading or extruding polymer with the mixture according to any of Claims 1 to 5.

13. Process for producing the plastics product according to Claim 9 by mixing at least one mixture according to any of Claims 1 to 5 and pulverulent PVC, preferably by mixing the constituents between 0.5 and 20 K below the melting point of the plastic.

14. Use of the mixture according to any of Claims 1 to 5 for coloring PVC, preferably rigid PVC.

15. Product comprising at least one plastics product according to any of Claims 6 to 9.

16. Product according to Claim 15, wherein the product comprises window profiles, pipes, floor coverings, insulation material or roofing sheets.

## Revendications

1. Mélange contenant :
• au moins un pigment contenant au moins un composé inorganique choisi dans le groupe constitué par les oxydes de fer, les oxyhydroxydes de fer, les ferrites de zinc, les oxydes de zinc, les ferrites de magnésium et les ferrites de manganèse, ledit au moins un composé inorganique étant équipé d'un revêtement contenant au moins un hydroxyde ou un oxyde de magnésium et de calcium, la proportion étant de 0,3 à 30 % en poids, de manière particulièrement préférée de 0,5 à 25 % en poids, de manière tout particulièrement préférée de 0,5 à 20 % en poids de magnésium et de 0,001 à 0,1 % en poids de calcium et de 0,001 à 0,1 % en poids de calcium, par rapport au pigment revêtu, et
• au moins un sel de calcium ou un sel de magnésium d'un acide gras de formule générale CₙH₂ₙ₊₁COOH (I), CₙH₂ₙ₋₁COOH (II), CₙH₂ₙ₋₃COOH (III) et/ou CₙH₂ₙ₋₅COOH (IV), n valant de 10 à 20, de préférence de 15 à 19.

2. Mélange selon la revendication 1, dans lequel le pigment contenu dans le mélange est constitué par au moins un composé inorganique choisi dans le groupe constitué par les oxydes de fer, les oxyhydroxydes de fer, les ferrites de zinc, les oxydes de zinc, les ferrites de magnésium et les ferrites de manganèse, ledit au moins un composé inorganique étant équipé d'un revêtement contenant au moins un hydroxyde ou un oxyde de magnésium et de calcium, de préférence d'un revêtement contenant au moins un hydroxyde de magnésium et de calcium.

3. Mélange selon la revendication 1 ou 2, dans lequel le revêtement dans le pigment contenu dans le mélange est directement relié avec ledit au moins un composé inorganique.

4. Mélange selon l'une quelconque des revendications 1 à 3, dans lequel le mélange de 0,3 à 30 % en poids, de préférence de 0,5 à 25 % en poids, de manière particulièrement préférée de 1 à 20 % en poids de magnésium et de calcium, calculé en tant que somme des teneurs des éléments magnésium et calcium, la somme des teneurs des éléments magnésium et calcium se rapportant au poids total du mélange.

5. Mélange selon l'une quelconque des revendications 1 à 4, dans lequel le mélange contient de 0,2 à 15 % en poids d'au moins un sel de calcium ou un sel de magnésium d'un acide gras de formule générale CₙH₂ₙ₊₁COOH (I), CₙH₂ₙ₋₁COOH (II), CₙH₂ₙ₋₃COOH (III) et/ou CₙH₂ₙ₋₅COOH (IV), de préférence de stéarate de calcium et/ou de stéarate de magnésium.

6. Produit de matière plastique, contenant :
• au moins un mélange selon l'une quelconque des revendications 1 à 5 et
• au moins un polymère, au moins 50 % en poids, de préférence au moins 80 % en poids du polymère étant formé par le monomère chlorure de vinyle,
la somme des composants susmentionnés étant de préférence de 40 à 100 % en poids, de manière particulièrement préférée de 70 à 100 % en poids, par rapport au poids total du produit de matière plastique.

7. Produit de matière plastique selon la revendication 6, contenant de 10 à 90 % en poids, de préférence de 20 à 70 % en poids, ou de 0,1 à 10 % en poids, de préférence de 0,5 à 5 % en poids du mélange selon l'une quelconque des revendications 1 à 5.

8. Produit de matière plastique selon l'une quelconque des revendications 6 ou 7, contenant de 0 à 15 % en poids, de préférence de 0 à 12 % en poids, de plastifiant, par rapport à la quantité de polymère contenue dans le produit de matière plastique.

9. Produit de matière plastique selon l'une quelconque des revendications 6 à 8, contenant un mélange d'un polymère en poudre et du mélange selon l'une quelconque des revendications 1 à 5.

10. Procédé de fabrication du mélange selon l'une quelconque des revendications 1 à 5, comprenant au moins les étapes suivantes :
a) la préparation d'une suspension aqueuse d'au moins un composé inorganique choisi dans le groupe constitué par les oxydes de fer, les oxyhydroxydes de fer, les ferrites de zinc, les oxydes de zinc, les ferrites de magnésium et les ferrites de manganèse,
et
b) la précipitation du revêtement d'au moins un hydroxyde ou un oxyde de magnésium ou de calcium sur le composé inorganique par ajout de sels de magnésium et/ou de calcium, de préférence sous forme dissoute, à la suspension de l'étape a), puis ajout d'un agent de précipitation choisi dans le groupe constitué par les hydroxydes alcalins, les hydroxydes alcalino-terreux et l'ammoniac, de préférence sous forme dissoute, à la suspension ou
b') la précipitation du revêtement d'au moins un hydroxyde ou oxyde de magnésium ou de calcium sur le composé inorganique par ajout d'un agent de précipitation choisi dans le groupe constitué par les hydroxydes alcalins, les hydroxydes alcalino-terreux et l'ammoniac, de préférence sous forme dissoute, à la suspension de l'étape a), puis ajout de sels de magnésium et/ou de calcium, de préférence sous forme dissoute, à la suspension,
et
c) l'isolement du pigment et/ou
c') le lavage du pigment et/ou
c'') le séchage du pigment et/ou
c''') le broyage du pigment,
et
d) le mélange du pigment obtenu à l'étape c''') avec au moins un sel de calcium ou un sel de magnésium d'un acide gras de formule générale (I), (II), (III) et/ou (IV), de préférence avec du stéarate de magnésium et/ou du stéarate de calcium,
le mélange étant obtenu.

11. Procédé de fabrication du mélange selon la revendication 10, selon lequel une étape de calcination, de préférence à des températures supérieures à 600 °C, est exclue.

12. Procédé de fabrication des produits de matière plastique selon l'une quelconque des revendications 6 à 9 par malaxage ou extrusion d'un polymère avec le mélange selon l'une quelconque des revendications 1 à 5.

13. Procédé de fabrication du produit de matière plastique selon la revendication 9 par mélange d'au moins un mélange selon l'une quelconque des revendications 1 à 5 et de PVC en poudre, de préférence par mélange des constituants entre 0,5 et 20 K en dessous du point de fusion de la matière plastique.

14. Utilisation du mélange selon l'une quelconque des revendications 1 à 5 pour la coloration de PVC, de préférence de PVC dur.

15. Produit contenant au moins un produit de matière plastique selon l'une quelconque des revendications 6 à 9.

16. Produit selon la revendication 15, dans lequel le produit comprend des profilés de fenêtres, des tubes, des revêtements de sols, des matériaux isolants ou des toitures.
